# EUROPEAN PATENT SPECIFICATION

(11) **EP 2 521 305 B1**
(45) Date of publication and mention of the grant of the patent: **13.09.2017**
(21) Application number: 10840562.2
(22) Date of filing: 28.12.2010
(51) Int. Cl.: H04L 12/14, H04W 4/24, H04M 15/00, H04L 12/813, H04L 12/801

(54) **METHOD, DEVICE AND SYSTEM FOR CONTROLLING USER SESSION POLICY**
VERFAHREN, VORRICHTUNG UND SYSTEM ZUR KONTROLLE VON BENUTZERSITZUNGSRICHTLINIEN
PROCÉDÉ, DISPOSITIF ET SYSTÈME DESTINÉS À COMMANDER UNE POLICE DE SÉANCE D'UTILISATEUR

(30) Priority: 28.12.2009 CN 200910244068
(43) Date of publication of application: 07.11.2012
(73) Proprietor: Huawei Technologies Co., Ltd., Longgang District Shenzhen, Guangdong 518129 (CN)
(72) Inventor: ZHANG, Jinxing, Shenzhen Guangdong 518129 (CN); LIN, Qingchun, Shenzhen Guangdong 518129 (CN); HU, Yusheng, Shenzhen Guangdong 518129 (CN)
(74) Representative: Epping - Hermann - Fischer
(86) International application number: PCT/CN2010/080358
(87) International publication number: WO 2011/079773

(56) References cited:
- EP-A1- 2 081 332
- EP-A1- 2 107 728
- EP-A1- 2 384 587
- WO-A1-2011/006889
- CN-A- 1 848 819
- CN-A- 101 801 038

## Description

### FIELD OF THE INVENTION

The present invention relates to the field of communications technology, and in particular to a policy control method, apparatus, and system for a user session.

### BACKGROUND OF THE INVENTION

The conventional circuit switched network is according to resource reservation and can well guarantee transmission quality of services. However, this leads to the problem that the utilization for transmission resources is low. The problem is not apparent when the service types are few and resource consumption is restricted. As users and operators demand for diversified services (for example, multimedia call, file downloading, web page browsing, and streaming media), communication networks evolve continuously to all-IP networks. To bear various transmission services with different quality of service (Quality of Service, hereinafter referred to as QoS for short) by using restricted network resources, the third generation partnership project (3rd Generation Partnership Project, hereinafter referred to as 3GPP for short) defines the concept of policy control, provides charging control to meet the requirements of diversified modes of operators, and finally proposes the policy and charging control (Policy and Charging Control, hereinafter referred to as PCC for short) architecture in R7. The latest version is R8. The PCC architecture can meet different QoS control and charging requirements.

In the PCC architecture defined in 3GPP R8, the major functional entities include: a policy and charging rules function (Policy and Charging Rules Function, hereinafter referred to as PCRF for short) entity, policy and charging enforcement function (Policy and Charging Enforcement Function, hereinafter referred to as PCEF for short) entity, and bearer binding and event report function (Bearer Binding and Event Report Function, hereinafter referred to as BBERF for short) entity.

The PCRF mainly performs functions, such as a PCC policy and flow-based charging control function, and provides event subscription and reporting between the PCRF and another connected functional entity. The PCEF is located in a packet data network (Packet Data Network, hereinafter referred to as PDN for short) gateway device (for example, PDN-Gateway on a system architecture evolution (System Architecture Evolution, hereinafter referred to as SAE for short) network and a gateway GPRS support node (Gateway GPRS Support Node, hereinafter referred to as GGSN for short) on the GPRS. The major function of the PCEF is to execute the PCC policy delivered by the PCRF or predefined by an operator. The BBERF is located at the access network gateway (for example, Serving-Gateway in SAE, and a serving GPRS support node (Serving GPRS Support Node, hereinafter referred to as SGSN for short), and can execute the QoS policy delivered by the PCRF, to perform QoS control.

The existing PCC policy control is according to users, and one or more IP connectivity access network (IP Connectivity Access Network, hereinafter referred to as IP-CAN for short) sessions are established for each user. Each IP-CAN session is according to one PDN connection, uniquely corresponds to one user, and is associated with multiple PCC policies.

During the implementation of the present invention, it is found that the prior art has at least the following disadvantages:
In the existing PCC policy control, the operation object of PCC is a single IP-CAN session, resulting in low operation efficiency and heavy load. The problem that the PCRF, as a policy center on a network, lacks the capability of performing overall policy control for a group of users who meet a certain condition needs to be solved urgently.

EP 2 081 332 A1 discloses a method for sharing network resources. The method for sharing network resources includes: setting a sharing group based on service types in the process of setting up a bearer and determining a maximum network resource for the sharing group; and allocating a resource for the bearer in the range of the maximum network resource. It also provides an apparatus for sharing network resources and further provides a method, system and corresponding Packet Data Network (PDN) gateway and Evolved NodeB (ENB). With the method and apparatus, embodiments of the invention implement the sharing of a maximum transmission rate among multiple bearers in an evolved network, solve the problem of low network resource utilization caused by the fact that each bearer occupies a fixed bandwidth resource, and implement maximum utilization of network resources.

WO 2010/086013 A1 relates to group session management for policy control. At present some situations occur where a policy control at individual user level is not enough. For example, where a plurality of users surpasses a load limit in a certain location area, which could imply a risk of network congestion, policy control decisions in conventional architectures have to be made by submitting corresponding orders for each user affected by the decision, thus resulting in a higher signalling and processing load. To overcome these drawbacks, the specification provides for new network entities and method to monitor and control a plurality of users, as dynamically determined according to different selection criteria, in order to compile users-related aggregated reports, to establish dynamic group of users whom specific policy control rules can be applied, and to map orders and information between group and user level.

WO 2011/006889 A1 relates to Congestion control in a telecommunications network. The telecommunications network supports one or more active data sessions between a server and at least a first and second communication terminal by providing at least a first and a second bearer for these terminals. The at least first and second communication terminal are assigned to a group for which a common group identifier is or has been stored. Further, a first individual congestion parameter for the first bearer and a second individual congestion parameter for the second bearer of the first and second communication terminal are or have been stored. A group load indicator is defined for the group of terminals corresponding to the common group identifier. The group load indicator is monitored and compared with a group load condition for the group of the at least first and second communication terminals corresponding to the common group identifier. Congestion is controlled by adjusting at least one of the first individual congestion parameter of the first bearer and the second individual congestion parameter of the second bearer when said group load indicator satisfies the group load condition.

### SUMMARY OF THE INVENTION

Embodiments of the present invention provide a policy control method, apparatus, and system for a user session to perform overall policy control for a group of users, improve operation efficiency, and reduce signaling load.

An embodiment of the present invention provides a policy control method for a user session. The method includes:
according to policy trigger information, acquiring, by a policy server, an aggregated operation that is corresponding to the policy trigger information and is used for performing policy control on a group of user sessions, where the aggregated operation includes an operation rule corresponding to the policy control and a condition parameter that is used for determining, by a gateway device, the group of user sessions, wherein the policy server is a PCRF, and the gateway device is a gateway device that includes a PCEF or BBERF; andsending, by the policy server, a first service message that includes the aggregated operation to the gateway device, so that the gateway device determines the group of user sessions according to the condition parameter and executes an operation on the group of user sessions according to the operation rule, wherein the condition parameter includes QoS Class Identifier, QCI, uplink/downlink bandwidth, Allocation Retention Priority, ARP, or Packet Data Network, PDN, information, or a combination of them,
wherein the sending the first service message that comprises the aggregated operation to the gateway device comprises:
   sending a service message that comprises the aggregated operation and is corresponding to a newly established dedicated session to the gateway device,
wherein before the sending the service message that comprises the aggregated operation and is corresponding to the newly established dedicated session to the gateway device, the method further comprises:
   receiving a first request message sent by the gateway device, wherein the first request message is used for requesting establishing the dedicated session used for transmitting the aggregated operation, and the first request message comprises a dedicated request ID and a dedicated session ID that are used for identifying the dedicated session; and
   storing the dedicated application ID and dedicated session ID;
   the service message that comprises the aggregated operation and is corresponding to the newly established dedicated session comprises the aggregated operation, dedicated application ID, and dedicated session ID.

An embodiment of the present invention further provides a policy control method for a user session. The method includes:
receiving, by a gateway device, a first service message that is sent by a policy server and includes an aggregated operation, where the aggregated operation is corresponding to policy trigger information and is used for performing policy control on a group of user sessions, and the aggregated operation includes an operation rule corresponding to the policy control and a condition parameter that is used for determining, by the gateway device, the group of user sessions, and the policy server is a PCRF, and the gateway device is a gateway device that includes a PCEF or BBERF; and
determining, by the gateway device, the group of user sessions according to the condition parameter, and executing an operation on the group of user sessions according to the operation rule, wherein the condition parameter includes QoS Class Identifier, QCI, uplink/downlink bandwidth, Allocation Retention Priority, ARP, or Packet Data Network, PDN, information, or a combination of them,
wherein the receiving the first service message that is sent by the policy server and comprises the aggregated operation comprises:
   receiving a service message that is sent by the policy server, comprises the aggregated operation, and is corresponding to a newly established dedicated session,
wherein before the receiving the service message that is sent by the policy server, comprises the aggregated operation, and is corresponding to the newly established dedicated session, the method further comprises:
   sending a first request message to the policy server, wherein the first request message is used for requesting establishing the dedicated session used for transmitting the aggregated operation, and the first request message comprises a dedicated request ID and a dedicated session ID that are used for identifying the dedicated session;
   the service message that comprises the aggregated operation and is corresponding to the newly established dedicated session comprises the aggregated operation, dedicated application ID, and dedicated session ID.

An embodiment of the present invention provides a policy server, including:
an acquiring module, configured to, according to policy trigger information, acquire an aggregated operation that is corresponding to the policy trigger information and is used for performing policy control on a group of user sessions, where the aggregated operation includes an operation rule corresponding to the policy control and a condition parameter that is used for determining, by a gateway device, the group of user sessions; and
a sending module, configured to send a first service message that includes the aggregated operation to the gateway device, so that the gateway device determines the group of user sessions according to the condition parameter and executes an operation on the group of user sessions according to the operation rule, wherein the condition parameter includes QoS Class Identifier, QCI, uplink/downlink bandwidth, Allocation Retention Priority, ARP, or Packet Data Network, PDN, information, or a combination of them,
wherein the policy server is a PCRF, and the gateway device is a gateway device that includes a PCEF or BBERF,
wherein the sending module comprises:
   a first sending unit, configured to send a service message that comprises the aggregated operation and is corresponding to a newly established dedicated session to the gateway device,
wherein the policy server further comprises:
   a second receiving module, configured to receive a first request message sent by the gateway device, wherein the first request message is used for requesting establishing the dedicated session corresponding to the service message sent by the first sending unit, and the first request message comprises a dedicated application ID and a dedicated session ID that are used for identifying the dedicated session; and
   a storing module, configured to store the dedicated application ID and dedicated session ID;
   the service message that comprises the aggregated operation and is corresponding to the newly established dedicated session comprises the aggregated operation, dedicated application ID, and dedicated session ID.

An embodiment of the present invention further provides a gateway device, including:
a receiving module, configured to receive a first service message that is sent by a policy server and includes an aggregated operation, where the aggregated operation is corresponding to the policy trigger information and is used for performing policy control on a group of user sessions, and the aggregated operation includes an operation rule corresponding to the policy control and a condition parameter that is used for determining, by a gateway device, the group of user sessions, wherein the policy server is a PCRF, and the gateway device is a gateway device that includes a PCEF or BBERF; and
an operating module, configured to determine the group of user sessions according to the condition parameter, and execute an operation on the group of user sessions according to the operation rule, wherein the condition parameter includes QoS Class Identifier, QCI, uplink/downlink bandwidth, Allocation Retention Priority, ARP, or Packet Data Network, PDN, information, or a combination of them,
wherein the receiving module comprises:
   a first receiving unit, configured to receive a service message that is sent by the policy server, comprises the aggregated operation, and is corresponding to a newly established dedicated session,
wherein the gateway device further comprises:
   a second sending module, configured to send a first request message to the policy server, wherein the first request message is used for requesting establishing the dedicated session corresponding to the service message received by the first receiving unit, and the first request message comprises a dedicated application ID and a dedicated session ID that are used for identifying the dedicated session;
   the service message that comprises the aggregated operation and is corresponding to the newly established dedicated session comprises the aggregated operation, dedicated application ID, and dedicated session ID.

An embodiment of the present invention further provides a policy control system for a user session, including any policy server and any gateway device provided in embodiments of the present invention.

According to the policy control method, apparatus, and system for a user session in the embodiments, a policy server acquires an aggregated operation corresponding to policy trigger information, where the aggregated operation is used for performing overall policy control on a group of user sessions that meet a certain condition, and then the policy server sends a first service message that includes the aggregated operation to a gateway device, so that the gateway device determines the group of user sessions according to a condition parameter in the aggregated operation and executes an operation on the group of user sessions according to an operation rule in the aggregated operation. In this manner, overall policy control is performed on a group of users who meet a certain condition, thereby improving operation efficiency, reducing signaling load, and enhancing a service control capability.

### BRIEF DESCRIPTION OF THE DRAWINGS

To illustrate the technical solutions in the embodiments of the present invention or in the prior art more clearly, the accompanying drawings required for describing the embodiments or the prior art are briefly described in the following. Apparently, the accompanying drawings in the following description merely show some embodiments of the present invention, and persons of ordinary skill in the art can derive other drawings from such accompanying drawings without creative efforts.
FIG. 1 is a schematic diagram of PCC architecture according to the latest definition in 3GPP R8;
FIG. 2 is a flow chart of a policy control method for a user session according to a first embodiment of the present invention;
FIG. 3 is a flow chart of a policy control method for a user session according to a second embodiment of the present invention;
FIG. 4 is a flow chart of a policy control method for a user session according to a third embodiment of the present invention;
FIG. 5 is a flow chart of a policy control method for a user session according to a fourth embodiment of the present invention;
FIG. 6 is a flow chart of a policy control method for a user session according to a fifth embodiment of the present invention;
FIG. 7 is a schematic diagram of a policy server according to a first embodiment of the present invention;
FIG. 8 is a schematic diagram of a policy server according to a second embodiment of the present invention;
FIG. 9 is a schematic diagram of a gateway device according to a first embodiment of the present invention; and
FIG. 10 is a schematic diagram of a gateway device according to a second embodiment of the present invention.

### DETAILED DESCRIPTION OF THE EMBODIMENTS

To make the objectives, technical solutions and advantages of the embodiments of the present invention clearer, the technical solutions according to the embodiments of the present invention are clearly and completely described with reference to the accompanying drawings in the embodiments of the present invention. Apparently, the embodiments in the following description are merely a part rather than all of the embodiments of the present invention. All other embodiments obtained by persons of ordinary skill in the art based on the embodiments of the present invention without creative effects shall fall within the protection scope of the present invention.

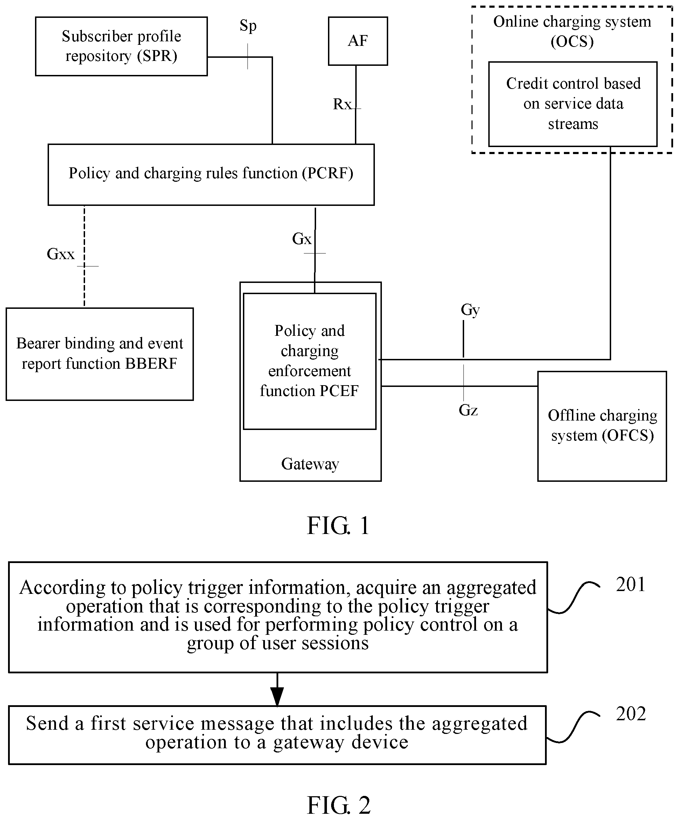

FIG. 1 is a schematic diagram of PCC architecture according to the latest definition in 3GPP R8. As shown in FIG. 1, the PCC architecture mainly includes a PCRF entity, a PCEF entity, and a BBERF entity.

The PCRF mainly performs functions, such as PCC policy and flow-based charging control, and provides the functions of event subscription and reporting between the PCRF and another connected functional entity. The PCRF formulates a corresponding PCC policy according to an operator policy, user subscription data (acquired from a subscriber profile repository (Subscriber Profile Repository, SPR for short)), current service information of a user (acquired from an application function entity (Application Function, AF for short)), local information (acquired from the PCEF), and so on. The PCRF acquires data from an SPR over an Sp interface. A PCC policy includes information, such as a detection rule for a service data stream (that is, a classified collection of IP streams for completing a certain service such as voice communication), a gate control state (allow/forbid in packet data transmission), a QoS rule, and a flow-based charging rule.

The PCEF entity is located at a PDN gateway device (for example, PDN-Gateway on an SAE, GGSN on a GPRS, and so on). A major function is to execute a PCC policy delivered by the PCRF or predefined by an operator, that is, to bind PCC policies. Specifically, the PCEF uses the information provided in a PCC policy to detect and measure a service data stream, perform gate control, ensure QoS for the service data stream, process user plane traffic, trigger session management of a control plane, and so on. The PCEF supports the function of event reporting.

When executing an online charging policy according to a PCC policy, the PCEF interacts with an online charging system (OCS) over a Gy interface to implement online charging. The OCS performs credit control based on a service data stream. When executing an offline charging policy according to a PCC policy, the PCEF interacts with an offline charging system (OFCS) over a Gz interface to implement offline charging.

The BBERF is located at an access network gateway (for example, Serving-Gateway on an SAE and SGSN on a GPRS), and can execute a QoS policy delivered by the PCRF and perform QoS control, which specifically includes: detection of a service data stream, bearer binding, and uplink bearer verification. The BBERF receives event trigger delivered by the PCRF to detect an event, and provides an event report to the PCRF.

Related interfaces in the PCC architecture are described as follows:
Gx reference point: The PCRF dynamically adjusts, through this reference point, the PCC policy and charging control function executed by the PCEF. The functions implemented through this reference point include: establish, maintain, and terminate an IP-CAN session; the PCEF requests the PCRF for a PCC policy; the PCRF provides the PCC policy for the PCEF; negotiate an IP-CAN session establishment mode. The PCEF can also provide IP-CAN related information for the PCRF and report a session event to the PCRF over this reference point. This reference point is based on the Diameter protocol defined by the Internet Engineering Task Force (Internet Engineering Task Force, IETF for short).

Gxx reference point: This reference point is responsible for maintaining a gateway control (Gateway control) session. The PCRF dynamically provides QoS control information for the BBERF over this reference point. The BBERF reports a transmission plane event to the PCRF or receives tunnel header encapsulation information, which is provided by the PCEF, through the PCRF over this reference point. The reference points in a 3GPP access technology and a non-3GPP access technology are Gxc and Gxa, respectively. This reference point is based on the Diameter protocol defined by the IETF.

Rx reference point: An AF delivers service-related information to the PCRF over this reference point. The PCRF provides IP-CAN related information for the AF and reports a session event to the AF over this reference point. This reference point is based on the Diameter protocol defined by the IETF.

The Diameter protocol is an IP-based new-generation AAA technology. The purpose thereof is to create an AAA protocol that can fully meet user access control requirements of current and future IP networks (including an NGN and a 3G), which is formed by a basic protocol, a transmission protocol, and application protocols for different scenarios (in Diameter, extension for different application scenarios are called applications).

After the PCRF is introduced to the PCC architecture, a network has the capability of performing a dynamical operation on a single IP-CAN. However, operation objects of the PCC do not include a group of IP-CAN sessions or all IP-CAN sessions in an integrated device that meet a certain condition, for example, PDN, QCI, and ARP, where QCI indicates a QoS class identifier (QoS Class Identifier) and ARP indicates an allocation retention priority (Allocation Retention Priority). In this way, the PCRF cannot implement control on an overall policy of this group of IP-CAN sessions, that is, it fails to perform creation, update, or deletion on an overall policy. However, it is necessary to implement control on an overall policy of a group of IP-CAN sessions that meet a certain condition. For example, when network congestion occurs, the service of a user with a high priority need to be assured. In this case, if each IP-CAN session is controlled separately, because the number of users involved is large and the requirement on instantaneity of policy control is high, two problems may occur in the prior art: A large amount of signaling interaction occurs, the instantaneity of handling a bursting event is affected, and a large amount of signaling interaction may result in a waste of transmission resources; the control operation for each IP-CAN session cannot be accurately determined.

In this way, to solve the disadvantages of the PCC architecture, an embodiment of the present invention provides a solution of performing uniform control on an overall policy of all IP-CAN sessions that meet a certain condition. The condition may be QCI, uplink/downlink bandwidth, ARP, or PDN information, or a combination of them.

FIG. 2 is a flow chart of a policy control method for a user session according to a first embodiment of the present invention. In this embodiment, a policy server is taken as a subject. As shown in FIG. 2, the method includes the following:
Step 201: According to policy trigger information, acquire an aggregated operation that is corresponding to the policy trigger information and is used for performing policy control on a group of user sessions, where the aggregated operation includes an operation rule corresponding to the policy control and a condition parameter that is used for determining the group of user sessions.

The policy server in each embodiment of the present invention may be a PCRF; a gateway device may be a gateway device that includes a PCEF or BBERF; a user session may be an IP-CAN session (session) or a gateway control session. The following takes the IP-CAN session as an example.

When the interior or exterior of a system encounters a certain state change, overall policy control performed on a group of user sessions that meet a certain condition may be needed; or configuration may be made on the PCRF in advance: overall policy control is actively performed on a group of user sessions that meet a certain condition at a certain time point. When the PCRF receives policy trigger information from the interior or exterior of the system, or when a preset time point at which the PCRF actively performs policy control is reached, the PCRF may acquire an aggregated operation corresponding to the policy trigger information. For example, the PCRF may search a preset rule library, to obtain the aggregated operation corresponding to the policy trigger information. The aggregated operation includes a condition parameter and an operation rule. When the preset time point at which the PCRF actively performs policy control is reached, the PCRF may receive a time trigger, that is, policy trigger information. An operation object of the aggregated operation, that is, a group of IP-CAN sessions may be determined according to the condition parameter, where the group of IP-CAN sessions include at least one IP-CAN session; the operation rule indicates an operation that needs to be executed for the group of IP-CAN sessions. Policy trigger information received by the PCRF from the exterior may include policy trigger information received by the PCRF from a gateway device.

The preset rule library may be configured on the PCRF in advance, and includes policy trigger information and the corresponding aggregated operation. By querying the preset rule library, the PCRF may learn which policy control actions need to be performed on a user session when a certain condition occurs (when the policy trigger information is received). An operation rule in the library may be specific operation content, and may also be an operation name corresponding to the operation content. A case in which the operation rule is specific operation content may be as follows: the PCRF dynamically creates an operation rule according to AF service information, user subscription information, and local information provided by the PCEF, and a gateway device may directly perform an operation after receiving the operation content. A case in which the operation rule is an operation name corresponding to the operation content may be as follows: an operation rule predefined by an operator is saved on the gateway device, its identity (that is, an operation name) is provided by the gateway device for the PCRF, and when the gateway device receives the operation name, the gateway device obtains the specific operation content after the querying, and then executes an operation.

Step 202: Send a first service message that includes the aggregated operation to a gateway device, so that the gateway device determines the group of user sessions according to the condition parameter and executes an operation on the group of user sessions according to the operation rule.

The PCRF sends the aggregated operation to the gateway device through the first service message. The PCRF may deliver a PCC policy to the gateway device over a Gx or Gxx reference point by using two methods: PUSH (active delivery) and PULL (delivery upon request). The difference between the two methods lies in that whether the action of delivering the PCC policy by the PCRF depends on a corresponding request message sent by the gateway device. In the active delivery method, the PCRF actively delivers a PCC policy as a response to an external or internal trigger event. In the delivery upon request method, the PCRF delivers a PCC policy to the gateway device according to the request message sent by the gateway device.

In the PUSH method, the first service message may be a re-authentication request (Re-Auth-Request, hereinafter referred to as RAR for short) message. In the PULL method, the first service message may be a credit control answer (Credit-Control-Answer, hereinafter referred to as CCA for short) message, where the CCA message is a message in response to a credit control request (Credit-Control-Request, hereinafter referred to as CCR for short) message.

The PCRF may send the first service message through any IP-CAN session, where the IP-CAN session may be an existing IP-CAN session, or a newly established dedicated IP-CAN session for aggregated policy control according to the present invention.

The first service message includes an aggregated operation. after receiving the aggregated operation, the gateway device can determine a group of user sessions that meet a condition parameter according to the condition parameter, and then the gateway device executes an operation on the group of user sessions according to the operation rule.

According to the policy control method for a user session in this embodiment of the present invention, a policy server acquires an aggregated operation corresponding to policy trigger information, where the aggregated operation is used for performing overall policy control on a group of user sessions that meet a certain condition, and then the policy server sends a first service message that includes the aggregated operation to a gateway device, so that the gateway device determines the group of user sessions according to a condition parameter in the aggregated operation and executes an operation on the group of user sessions according to an operation rule in the aggregated operation. In this manner, overall policy control is performed on a group of users who meet a certain condition, thereby improving operation efficiency, reducing signaling load, and enhancing a service control capability.

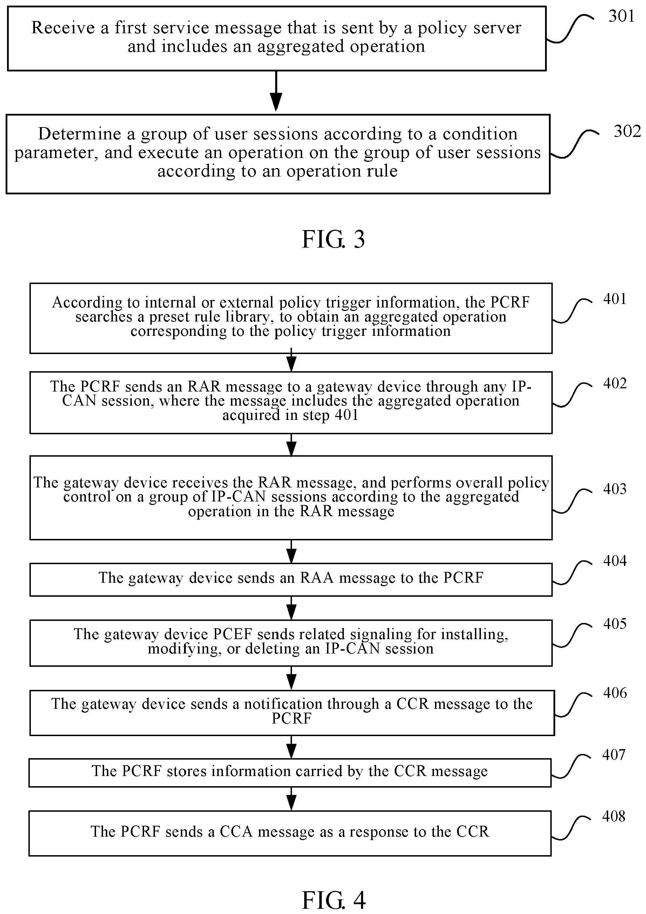

FIG. 3 is a flow chart of a policy control method for a user session according to a second embodiment of the present invention. Compared with the method in the first embodiment of the present invention, in this embodiment, a gateway device is taken as a subject. As shown in FIG. 3, this method includes the following:
Step 301: Receive a first service message that is sent by a policy server and includes an aggregated operation, where the aggregated operation is corresponding to policy trigger information and is used for performing policy control on a group of user sessions, and the aggregated operation includes an operation rule corresponding to the policy control and a condition parameter that is used for determining the group of user sessions.

The gateway device receives the first service message sent by the PCRF, and acquires the aggregated operation from the first service message. For the specific description about the first service message and aggregated operation, reference can be made to the description about the method in the first embodiment of the present invention, and details are not repeated herein.

Step 302: Determine the group of user sessions according to the condition parameter, and execute an operation on the group of user sessions according to the operation rule.

The gateway device determines a group of IP-CAN sessions that meet the condition parameter according to the condition parameter in the aggregated operation, and performs overall policy control on the group of IP-CAN sessions according to the operation rule in the aggregated operation.

According to the policy control method for a user session in this embodiment of the present invention, the gateway device receives an aggregated operation that is sent by a policy server through a first service message, determines a group of user sessions that meet a condition parameter according to the condition parameter in the aggregated operation, and performs overall policy control on the group of user sessions according to an operation rule in the aggregated operation. In this manner, overall policy control is performed on a group of users who meet a certain condition, thereby improving the operation efficiency, reducing the signaling load, and enhancing the service control capability.

The following specifically describes the embodiment of the present invention with respect to the PUSH method and PULL method.

FIG. 4 is a flow chart of a policy control method for a user session according to a third embodiment of the present invention. In this embodiment, the PUSH method is taken for description. As shown in FIG. 4, the method includes the following:
Step 401: According to internal or external policy trigger information, the PCRF searches a preset rule library, to obtain an aggregated operation corresponding to the policy trigger information.

The policy trigger information may be time policy trigger information or external input policy trigger information. When the PCRF is configured to actively deliver a policy upon arrival of a certain time point, the PCRF may be internally triggered and actively delivers the policy upon arrival of the time point. The external input policy trigger information may be, for example, cell congestion or traffic control. When cell congestion occurs, or traffic control is needed, the PCRF receives external policy trigger information.

The aggregated operation includes a condition parameter and an operation rule. The condition parameter, for example, PDN, QCI, ARP, uplink/downlink bandwidth, or a combination of them, is used for determining a group of IP-CAN sessions or all IP-CAN sessions on an integrated device.

Step 402: The PCRF sends an RAR message to a gateway device through any IP-CAN session, where the message includes the aggregated operation acquired in step 401.

To support this embodiment of the present invention, an existing Diameter application protocol Gx/Gxx needs to be extended. This embodiment provides a possible extension method. For example, the new attribute-value-pairs (Attribute-Value-Pairs, hereinafter referred to as AVP for short): Charging-Rule-AggreOperation AVP in the aggregated operation is defined in the RAR or CCR message (RAR message in this embodiment), and its data type is group:

```
         Charging-Rule-AggreOperation ::= < AVP Header: 10×× >
         [Charging-Rule-AggreCondition]
         [ Charging-Rule-Name]
         [ Charging-Rule-AggreReason]
 [AVP]
```

The Charging-Rule-AggreCondition AVP is the condition parameter, such as QCI, uplink/downlink bandwidth, ARP, PDN identity, and gateway identity (device identity or IP address), in the embodiment of the present invention, and is used for determining a group of IP-CAN sessions. For example, a definition form of the Charging-Rule-AggreCondition AVP may be as follows:

```
         Charging-Rule-AggreCondition ::= < AVP Header: 10×× >
         *2[ QoS-Class-Identifier ]
         *2[Guaranteed-Bitrate-UL ]
         *2[Guaranteed-Bitrate-DL ]
         *2[ Allocation-Retention-Priority]
         *[Called-Station-ID]
         *[Gateway-Identifier]
         [3GPP-User-Location-Info]
         [RAT-Type AVP]
         [3GPP-SGSN-Address]
         [Gateway-Identifier]
 [AVP]
```

The delimiter "*2" in the definition indicates that the corresponding AVP can occur twice at most, and is used to describe a value range. The AVP that occurs for the first time specifies the minimum value, and the AVP that occurs for the second time specifies the maximum value. If the AVP occurs only once, it indicates that the maximum value and the minimum value are the same. The delimiter "*" that is not followed by a number indicates that the corresponding AVP can occur for infinite times, and is used to describe multiple definite values. The Gateway-Identifier AVP carries gateway identity information, and may be the device identity or IP address of a PDN-GW or Serving-GW. A group of IP-CAN sessions in this embodiment of the present invention may be all IP-CAN sessions on an integrated device, and may be determined by the Charging-Rule-AggreCondition AVP. For example, it can be defined as follows: When the Charging-Rule-AggreCondition AVP does not exist, a policy operation is delivered to all IP-CAN sessions on the integrated device by default.

The Charging-Rule-AggreReason AVP is the policy trigger information in this embodiment, and is used for specifying a reason for performing an aggregated operation.

The operation rule in this embodiment may be specific operation content, and may also be an operation name corresponding to the operation content. The Charging-Rule-Name AVP may be an operation name corresponding to operation content, and is used for specifying operation content that has been predefined on the gateway device.

Step 403: The gateway device receives the RAR message, and performs overall policy control on a group of IP-CAN sessions according to the aggregated operation in the RAR message.

After receiving the RAR message sent through any IP-CAN session, the gateway device checks whether the message includes the Charging-Rule-AggreOperation AVP. If the AVP exists, it indicates that the PCRF will perform an operation for a collection. The gateway device then checks the Charging-Rule-AggreOperation AVP, selects all IP-CAN sessions that meet an update condition, and executes uniformly policy control according to the predefined rule name indicated by the Charging-Rule-Name AVP.

Step 404: The gateway device sends a re-auth-answer (Re-Auth-Answer, hereinafter referred to as RAA for short) message to the PCRF, to notify a result of the policy control to the PCRF.

If the policy control operation fails, the RAA message will carry the reason for operation failure.

When the gateway device performs policy control on the group of IP-CAN sessions, if a certain IP-CAN session or IP-CAN sessions need to be installed, modified, or deleted, the following operations are performed for each IP-CAN session to be installed, modified, or deleted:
Step 405: The gateway device PCEF sends related signaling for installing, modifying, or deleting an IP-CAN session.

If the PCEF further needs to send an update message to the PCRF, continue with the following steps:
Step 406: The gateway device sends a notification to the PCRF through a CCR message, to report an event related to a session and a PCC policy, or indicate termination of an IP-CAN session or termination of a session. The CCR carries related information: the Session-Id AVP indicates a current IP-CAN session, and the CC-Request-Type AVP parameter indicates a different request type. For example, if the gateway device sends a CCR to request a PCC policy again or notify an event upon session change, the CC-Request-Type AVP is set to UPDATE_REQUEST. The parameter value TERMINATION_REQUEST indicates that a current IP-CAN session is terminated. The current status of the PCC is reported by carrying the Charging-Rule-Report AVP in the CCR.

Step 407: The PCRF stores information carried by the CCR message.

Step 408: The PCRF sends a CCA message as a response to the CCR message.

The operation object from step 405 to step 408 is a single IP-CAN session.

According to the policy control method for a user session in this embodiment, a policy server acquires an aggregated operation corresponding to policy trigger information, where the aggregated operation is used for performing overall policy control on a group of user sessions that meet a certain condition, and then the policy server sends a first service message that includes the aggregated operation to a gateway device, so that the gateway device determines the group of user sessions according to a condition parameter in the aggregated operation and executes an operation on the group of user sessions according to an operation rule in the aggregated operation. In this manner, overall policy control is performed on a group of users who meet a certain condition, thereby improving the operation efficiency, reducing the signaling load, and enhancing the service control capability.

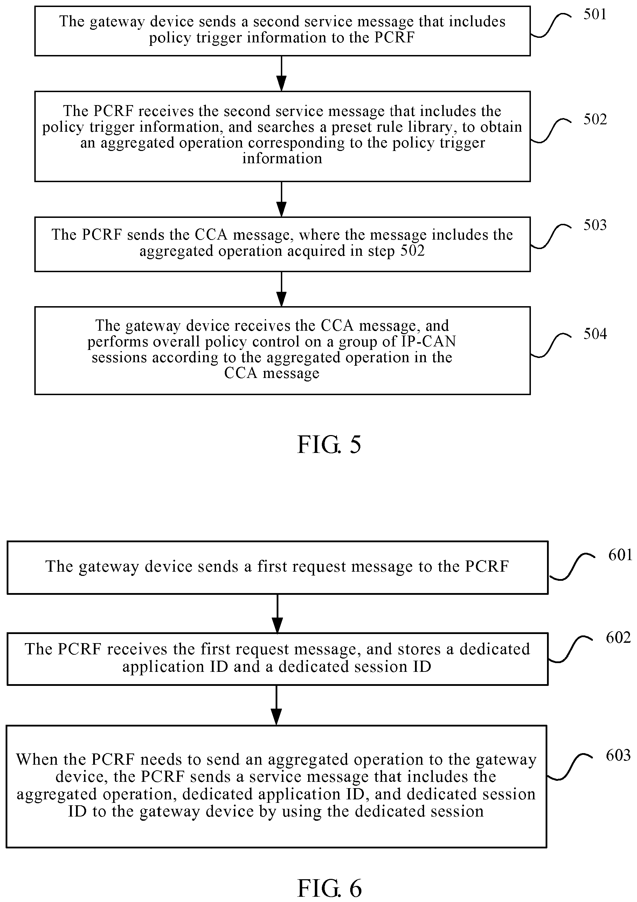

FIG. 5 is a flow chart of a policy control method for a user session according to a fourth embodiment of the present invention. In this embodiment, with respect to the PULL method, the following scenario is taken for description: In 3GPP, because the GGSN performs flow control, all users that use Wi-Fi access need to be controlled. As shown in FIG. 5, this method includes the following:
Step 501: A gateway device sends a second service message that includes policy trigger information to the PCRF.

The policy trigger information in this embodiment indicates that the GGSN performs flow control, and the second service message is a CCR request.

The following presetting is performed on the gateway device: When certain cases occur, the policy trigger information needs to be sent to the PCRF, so that the PCRF performs overall policy control on a group of IP-CAN sessions. When the GGSN performs flow control, overall policy control needs to be performed on a group of IP-CAN sessions in order to protect the device and provide differentiated services as far as possible. In this way, the gateway device is pre-configured, so that the gateway device sends a CCR request to the PCRF to apply for policy control after the GGSN starts flow control. The policy trigger information in the CCR request is the start of flow control.

Step 502: The PCRF receives the second service message that includes the policy trigger information, and searches a preset rule library, to obtain an aggregated operation corresponding to the policy trigger information.

The aggregated operation includes a condition parameter and an operation rule. When the GGSN performs flow control, all users that use Wi-Fi access need to be controlled, and the overall bandwidth for Wi-Fi users is restricted to below 1 Gbit/s. In this way, the condition parameter is sessions of all users that use Wi-Fi access, and the operation rule is to restrict the overall bandwidth to below 1 Gbit/s.

Step 503: The PCRF returns a CCA message to send the aggregated operation acquired in step 502.

Step 504: After receiving the CCA message, the gateway device performs overall policy control on a group of IP-CAN sessions according to the aggregated operation in the CCA message, and restricts the overall bandwidth for Wi-Fi users to below 1 Gbit/s. Specifically, the GGSN may determine, with a local policy, how to restrict the overall bandwidth for Wi-Fi users to below 1 Gbit/s. For example, a user whose ARP is low is forcibly deactivated, so that the overall bandwidth for a user whose ARP is medium does not exceed 500 Mbit/s, and the overall bandwidth for a user whose ARP is high does not exceed 1 Gbit/s.

When the gateway device performs policy control on the group of IP-CAN sessions, if a certain IP-CAN session or IP-CAN sessions need to be installed, modified, or deleted, the operations from step 406 to step 409 in the third embodiment of the method are performed for each IP-CAN session to be installed, modified, or deleted. Details are not repeated herein.

According to the policy control method for a user session in this embodiment, the gateway device receives an aggregated operation that is sent by a policy server through a first service message, determines a group of user sessions that meet a condition parameter according to the condition parameter in the aggregated operation, and performs overall policy control on the group of user sessions according to an operation rule in the aggregated operation. In this manner, overall policy control is performed on a group of users who meet a certain condition, thereby improving the operation efficiency, reducing the signaling load, and enhancing the service control capability.

In each preceding embodiment of the present invention, the PCRF may send the RAR message or CCA message through any IP-CAN session, where the IP-CAN session may be an existing IP-CAN session, or a newly established dedicated IP-CAN session for the aggregated policy control according to the present invention. The following describes how to establish a dedicated IP-CAN session and use the dedicated IP-CAN session to send an aggregated operation.

A session between the gateway device and the PCRF is established. The session is specially used to exchange the policy control for a collection of users or for an integrated device. The dedicated session may be dynamically initiated by the gateway device at any time point, or terminated by the gateway device and PCRF at any time point. The life cycle of the session is independent of any user session, and may be long. For example, a session is initiated once the gateway device starts initialization, or is initiated upon attach of a first user when the device is ready. The life cycle may be short. For example, a session is initiated at a certain time point (when a fault occurs), and terminated when a related operation ends. Similar to a Gx/Gxx extended application, a new 3GPP-oriented Diameter application is defined for a dedicated session of all users, and a new Application-ID is allocated according to an existing extension mechanism in Diameter. The session may implement a design function by defining a new message, or may reuse a message in an existing Diameter protocol. In this embodiment, a dedicated session is still transferred over a Gx/Gxx reference point, and may reuse the following messages used in Gx/Gxx extension: CCR, CCA, RAR, and RAA messages.

FIG. 6 is a flow chart of a policy control method for a user session according to a fifth embodiment of the present invention. This embodiment describes a process of sending an aggregated operation by using a newly established dedicated session. As shown in FIG. 6, this method includes the following:
Step 601: A gateway device sends a first request message to a PCRF, where the first request message is used for establishing a dedicated session used for transmitting an aggregated operation, and the first request message includes a dedicated application ID and a dedicated session ID that are used for identifying the dedicated session.

In the PUSH and PULL methods, establishment of the dedicated session is initiated by the gateway device. In PULL method, when the gateway device sends a CCR message that includes the policy trigger information to the PCRF, the gateway device may send another CCR message that carries a session identity Session-Id AVP to the PCRF. The AVP is dynamically allocated at the beginning of session initiation, and is globally unique and remains unchanged before the session ends. The message further carries an Auth-Application-Id AVP that saves the newly allocated Application-ID which identifies a current Session-Id as a dedicated session.

Step 602: The PCRF receives the first request message, and stores the dedicated application ID and dedicated session ID.

After receiving the CCR message, the PCRF checks the Auth-Application-Id AVP and determines according to the AVP that the current session is a dedicated session with respect to a user collection. When the PCRF accepts the CCR request, the PCRF stores the dedicated session identity Session-Id and Application-ID, and sends a CAA response, and then the dedicated session is established. After the dedicated session is established, the stored dedicated Session-Id session identity can be used for identifying a message that is between the gateway device and the PCRF and is related to a group of user sessions.

Step 603: When the PCRF needs to send an aggregated operation to the gateway device, the PCRF sends a service message that includes the aggregated operation, dedicated application ID, and dedicated session ID to the gateway device by using the dedicated session.

For the specific process of this step, reference may be made to the description of sending the aggregated operation by the PCRF to the gateway device in each preceding embodiment of the present invention, and details are not repeated herein.

In the PULL method, each time when the gateway device needs to send policy trigger information to the PCRF, the gateway device can request establishing a dedicated session. Therefore, multiple dedicated sessions may transmit aggregated operations in parallel. In the PUSH method, only one pre-established dedicated session is available. The transmission of an aggregated operation between the PCRF and the gateway device is serial transmission.

According to the policy control method for a user session in this embodiment, the gateway device receives an aggregated operation that is sent by a policy server through a first service message, determines a group of user sessions that meet a condition parameter according to the condition parameter in the aggregated operation, and performs overall policy control on the group of user sessions according to an operation rule in the aggregated operation. In this manner, overall policy control is performed on a group of users who meet a certain condition, thereby improving the operation efficiency, reducing the signaling load, and enhancing the service control capability.

Persons of ordinary skill in the art should understand that all or part of the steps of the method in each preceding embodiment of the present invention may be implemented by a program instructing relevant hardware. The program may be stored in a computer readable storage medium. When the program runs, the program executes the steps of the method in each embodiment above. The storage medium may be any medium capable of storing program codes, such as ROM, RAM, magnetic disk, or CD-ROM.

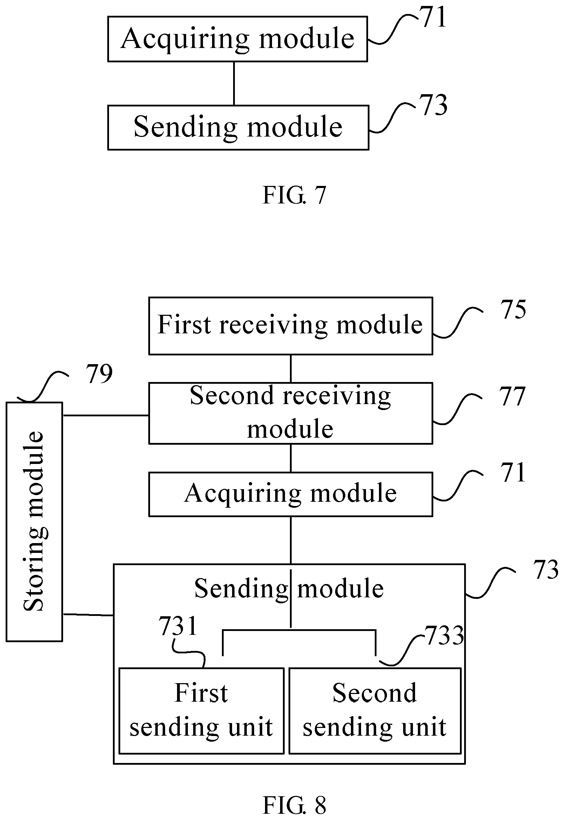

FIG. 7 is a schematic diagram of a policy server according to a first embodiment of the present invention. As shown in FIG. 7, the policy server includes an acquiring module 71 and a sending module 73.

The acquiring module 71 is configured to: according to policy trigger information, acquire an aggregated operation that is corresponding to the policy trigger information and is used for performing policy control on a group of user sessions, where the aggregated operation includes an operation rule corresponding to the policy control and a condition parameter that is used for determining the group of user sessions. The sending module 73 is configured to send a first service message that includes the aggregated operation to a gateway device, so that the gateway device determines the group of user sessions according to the condition parameter and executes an operation on the group of user sessions according to the operation rule.

For the working principles and procedures of each module in this embodiment, reference may be made to the description in the method embodiments of the present invention, and details are not repeated herein.

According to this embodiment of the present invention, the policy server acquires an aggregated operation corresponding to policy trigger information, where the aggregated operation is used for performing overall policy control on a group of user sessions that meet a certain condition, and then the policy server sends a first service message that includes the aggregated operation to a gateway device, so that the gateway device determines the group of user sessions according to a condition parameter in the aggregated operation and executes an operation on the group of user sessions according to an operation rule in the aggregated operation. In this manner, overall policy control is performed on a group of users who meet a certain condition, thereby improving operation efficiency, reducing signaling load, and enhancing a service control capability.

FIG. 8 is a schematic diagram of a policy server according to a second embodiment of the present invention. As shown in FIG. 8, on the basis of the policy server in the first embodiment of the present invention, the policy server in this embodiment further includes a first receiving module 75, a second receiving module 77, and a storing module 79.

The sending module 73 includes a first sending unit 731 or a second sending unit 732.

The first receiving module 75 is configured to receive a second service message that includes policy trigger information and is sent by the gateway device. The second receiving module 77 is configured to receive a first request message sent by the gateway device, where the first request message is used for requesting establishing a dedicated session corresponding to a service message sent by the first sending unit 731, and the first request message includes a dedicated application ID and a dedicated session ID that are used for identifying the dedicated session. The storing module 79 is configured to store the dedicated application ID and dedicated session ID. The service message that includes the aggregated operation and is corresponding to the newly established dedicated session includes the aggregated operation, dedicated application ID, and dedicated session ID.

The first sending unit 731 is configured to send the service message that includes the aggregated operation and is corresponding to the newly established dedicated session to the gateway device. The second sending unit 733 is configured to send the service message that includes the aggregated operation and is corresponding to an existing user session to the gateway device.

For the working principles and procedures of each module in this embodiment, reference may be made to the description in each preceding method embodiment of the present invention, and details are not repeated herein.

According to this embodiment of the present invention, the policy server acquires an aggregated operation corresponding to policy trigger information, where the aggregated operation is used for performing overall policy control on a group of user sessions that meet a certain condition, and then the policy server sends a first service message that includes the aggregated operation to a gateway device, so that the gateway device determines the group of user sessions according to a condition parameter in the aggregated operation and executes an operation on the group of user sessions according to an operation rule in the aggregated operation. In this manner, overall policy control is performed on a group of users who meet a certain condition, thereby improving the operation efficiency, reducing the signaling load, and enhancing the service control capability.

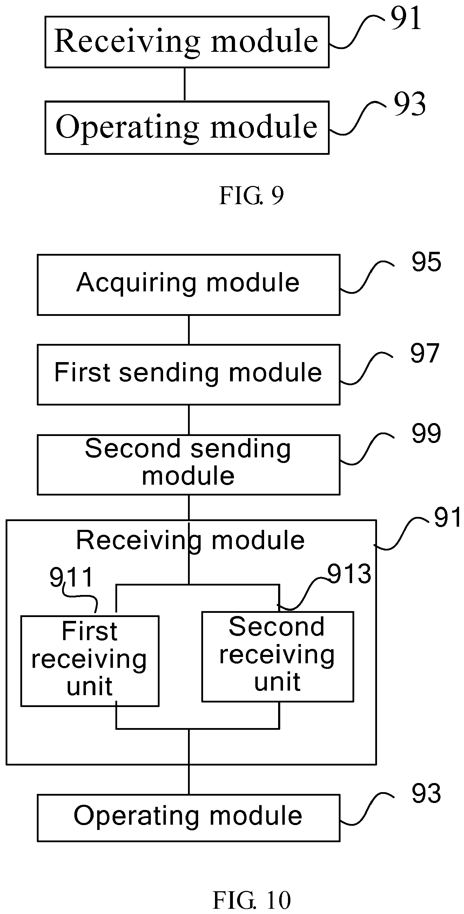

FIG. 9 is a schematic diagram of a gateway device according to a first embodiment of the present invention. As shown in FIG. 9, the gateway device in this embodiment includes a receiving module 91 and an operating module 93.

The receiving module 91 is configured to receive a first service message that is sent by a policy server and includes an aggregated operation, where the aggregated operation is corresponding to the policy trigger information and is used for performing policy control on a group of user sessions, and the aggregated operation includes an operation rule corresponding to the policy control and a condition parameter that is used for determining the group of user sessions. The operating module 93 is configured to determine the group of user sessions according to the condition parameter, and execute an operation on the group of user sessions according to the operation rule.

For the working principles and procedures of each module in this embodiment, reference may be made to the description in each preceding method embodiment of the present invention, and details are not repeated herein.

According to this embodiment of the present invention, the gateway device receives an aggregated operation that is sent by a policy server through a first service message, determines a group of user sessions that meet a condition parameter according to the condition parameter in the aggregated operation, and performs overall policy control on the group of user sessions according to an operation rule in the aggregated operation. In this manner, overall policy control is performed on a group of users who meet a certain condition, thereby improving the operation efficiency, reducing the signaling load, and enhancing the service control capability.

FIG. 10 is a schematic diagram of a gateway device according to a second embodiment of the present invention. As shown in FIG. 10, on the basis of the gateway device in the first embodiment of the present invention, the gateway device further includes an acquiring module 95, a first sending module 97, and a second sending module 99.

The receiving module 91 includes a first receiving unit 911 or a second receiving unit 913.

The acquiring module 95 is configured to acquire policy trigger information according to a preset trigger rule. The first sending module 97 is configured to send a second service message that includes policy trigger information to the policy server. The second sending module 99 is configured to send a first request message to the policy server, where the first request message is used for requesting establishing a dedicated session corresponding to a service message received by the first receiving unit 911, the first request message includes a dedicated application ID and a dedicated session ID that are used for identifying the dedicated session, and the service message that includes the aggregated operation and is corresponding to the newly established dedicated session includes the aggregated operation, dedicated application ID, and dedicated session ID.

The first receiving unit 911 is configured to receive the service message that is sent by the policy server and includes the aggregated operation and is corresponding to the newly established dedicated session. The second receiving unit 913 is configured to receive the service message that is sent by the policy server and includes the aggregated operation and is corresponding to an existing user session.

For the working principles and procedures of each module in this embodiment, reference may be made to the description in each preceding method embodiments of the present invention, and details are not repeated herein.

According to this embodiment of the present invention, the gateway device receives an aggregated operation that is sent by a policy server through a first service message, determines a group of user sessions that meet a condition parameter according to the condition parameter in the aggregated operation, and performs overall policy control on the group of user sessions according to an operation rule in the aggregated operation. In this manner, overall policy control is performed on a group of users who meet a certain condition, thereby improving the operation efficiency, reducing the signaling load, and enhancing the service control capability.

An embodiment of the present invention further provides a policy control system for a user session. The system includes any policy server and any gateway device provided in the embodiments of the present invention.

For the working principles and procedures of each module in this embodiment, reference may be made to the description in each preceding method embodiment of the present invention, and details are not repeated herein.

According to the policy control system for a user session in this embodiment of the present invention, the gateway device receives an aggregated operation that is sent by a policy server through a first service message, determines a group of user sessions that meet a condition parameter according to the condition parameter in the aggregated operation, and performs overall policy control on the group of user sessions according to an operation rule in the aggregated operation. In this manner, overall policy control is performed on a group of users who meet a certain condition, thereby improving the operation efficiency, reducing the signaling load, and enhancing the service control capability.

## Claims

1. A policy control method for a user session, the method comprises:
according to policy trigger information, acquiring (201), by a policy server, an aggregated operation that is corresponding to the policy trigger information and is used for performing policy control on a group of user sessions, wherein the aggregated operation comprises an operation rule corresponding to the policy control and a condition parameter that is used for determining, by a gateway device, the group of user sessions, wherein the policy server is a Policy and Charging Rules Function, PCRF, and the gateway device is a gateway device that includes a Policy and Charging Enforcement Function, PCEF, or a Bearer Binding and Event Report Function, BBERF; and
sending (202), by the policy server, a first service message that comprises the aggregated operation to the gateway device, so that the gateway device determines the group of user sessions according to the condition parameter and executes an operation on the group of user sessions according to the operation rule, wherein the condition parameter includes QoS Class Identifier, QCI, uplink/downlink bandwidth, Allocation Retention Priority, ARP, or Packet Data Network, PDN, information, or a combination of them,
wherein the sending the first service message that comprises the aggregated operation to the gateway device comprises:
sending a service message that comprises the aggregated operation and is corresponding to a newly established dedicated session to the gateway device,
wherein before the sending the service message that comprises the aggregated operation and is corresponding to the newly established dedicated session to the gateway device, the method further comprises:
receiving a first request message sent by the gateway device, wherein the first request message is used for requesting establishing the dedicated session used for transmitting the aggregated operation, and the first request message comprises a dedicated request ID and a dedicated session ID that are used for identifying the dedicated session; and
storing the dedicated application ID and dedicated session ID;
the service message that comprises the aggregated operation and is corresponding to the newly established dedicated session comprises the aggregated operation, dedicated application ID, and dedicated session ID.

2. The policy control method for a user session according to claim 1, wherein before the acquiring the aggregated operation that is corresponding to the policy trigger information and is used for performing the policy control on the group of user sessions according to the policy trigger information, the method further comprises:
receiving a second service message that comprises the policy trigger information and is sent by the gateway device.

3. A policy control method for a user session, the method comprises:
receiving (301), by a gateway device, a first service message that is sent by a policy server and comprises an aggregated operation, wherein the aggregated operation is corresponding to policy trigger information and is used for performing policy control on a group of user sessions, and the aggregated operation comprises an operation rule corresponding to the policy control and a condition parameter that is used for determining, by the gateway device, the group of user sessions, and the policy server is a Policy and Charging Rules Function, PCRF, and the gateway device is a gateway device that includes a Policy and Charging Enforcement Function, PCEF, or a Bearer Binding and Event Report Function, BBERF; and
determining (302), by the gateway device, the group of user sessions according to the condition parameter, and executing an operation on the group of user sessions according to the operation rule, wherein the condition parameter includes QoS Class Identifier, QCI, uplink/downlink bandwidth, Allocation Retention Priority, ARP, or Packet Data Network, PDN, information, or a combination of them,
wherein the receiving the first service message that is sent by the policy server and comprises the aggregated operation comprises:
receiving a service message that is sent by the policy server, comprises the aggregated operation, and is corresponding to a newly established dedicated session,
wherein before the receiving the service message that is sent by the policy server, comprises the aggregated operation, and is corresponding to the newly established dedicated session, the method further comprises:
sending a first request message to the policy server, wherein the first request message is used for requesting establishing the dedicated session used for transmitting the aggregated operation, and the first request message comprises a dedicated request ID and a dedicated session ID that are used for identifying the dedicated session;
the service message that comprises the aggregated operation and is corresponding to the newly established dedicated session comprises the aggregated operation, dedicated application ID, and dedicated session ID.

4. The policy control method for a user session according to claim 3, wherein before the receiving the first service message that is sent by the policy server and comprises the aggregated operation, the method further comprises:
acquiring the policy trigger information according to a preset trigger rule; and
sending a second service message that comprises the policy trigger information to the policy server, so that the policy server sends the first service message that comprises the aggregated operation according to the policy trigger information.

5. A policy server comprising:
an acquiring module (71), configured to: according to policy trigger information, acquire an aggregated operation that is corresponding to the policy trigger information and is used for performing policy control on a group of user sessions, wherein the aggregated operation comprises an operation rule corresponding to the policy control and a condition parameter that is used for determining, by a gateway device, the group of user sessions; and
a sending module (73), configured to send a first service message that comprises the aggregated operation to the gateway device, so that the gateway device determines the group of user sessions according to the condition parameter and executes an operation on the group of user sessions according to the operation rule, wherein the condition parameter includes QoS Class Identifier, QCI, uplink/downlink bandwidth, Allocation Retention Priority, ARP, or Packet Data Network, PDN, information, or a combination of them,
wherein the policy server is a Policy and Charging Rules Function, PCRF, and the gateway device is a gateway device that includes a Policy and Charging Enforcement Function, PCEF or a Bearer Binding and Event Report Function, BBERF,
wherein the sending module (73) comprises:
a first sending unit (731), configured to send a service message that comprises the aggregated operation and is corresponding to a newly established dedicated session to the gateway device,
wherein the policy server further comprises:
a second receiving module (77), configured to receive a first request message sent by the gateway device, wherein the first request message is used for requesting establishing the dedicated session corresponding to the service message sent by the first sending unit (731), and the first request message comprises a dedicated application ID and a dedicated session ID that are used for identifying the dedicated session; and
a storing module (79), configured to store the dedicated application ID and dedicated session ID;
the service message that comprises the aggregated operation and is corresponding to the newly established dedicated session comprises the aggregated operation, dedicated application ID, and dedicated session ID.

6. The policy server according to claim 5, further comprising:
a first receiving module (75), configured to receive a second service message that comprises policy trigger information and is sent by the gateway device.

7. A gateway device comprising :
a receiving module (91), configured to receive a first service message that is sent by a policy server and comprises an aggregated operation, wherein the aggregated operation is corresponding to policy trigger information and is used for performing policy control on a group of user sessions, and the aggregated operation comprises an operation rule corresponding to the policy control and a condition parameter that is used for determining, by a gateway device, the group of user sessions, wherein the policy server is a Policy and Charging Rules Function, PCRF, and the gateway device is a gateway device that includes a Policy and Charging Enforcement Function, PCEF, or a Bearer Binding and Event Report Function, BBERF; and
an operating module (93), configured to determine the group of user sessions according to the condition parameter, and execute an operation on the group of user sessions according to the operation rule, wherein the condition parameter includes QoS Class Identifier, QCI, uplink/downlink bandwidth, Allocation Retention Priority, ARP, or Packet Data Network, PDN, information, or a combination of them,
wherein the receiving module (91) comprises:
a first receiving unit (911), configured to receive a service message that is sent by the policy server, comprises the aggregated operation, and is corresponding to a newly established dedicated session,
wherein the gateway device further comprises:
a second sending module (99), configured to send a first request message to the policy server, wherein the first request message is used for requesting establishing the dedicated session corresponding to the service message received by the first receiving unit, and the first request message comprises a dedicated application ID and a dedicated session ID that are used for identifying the dedicated session;
the service message that comprises the aggregated operation and is corresponding to the newly established dedicated session comprises the aggregated operation, dedicated application ID, and dedicated session ID.

8. The gateway device according to claim 7, further comprising:
an acquiring module (95), configured to acquire the policy trigger information according to a preset trigger rule; and
a first sending module (97), configured to send a second service message that comprises the policy trigger information to the policy server, so that the policy server sends the first service message that comprises the aggregated operation according to the policy trigger information.

9. A policy control system for a user session, **characterized in that** the policy control system comprises the policy server according to any one of claims 5 to 6 and the gateway device according to any one of claims 7 to 8.

## Patentansprüche

1. Strategiesteuerverfahren für eine Anwendersitzung, wobei das Verfahren Folgendes umfasst:
gemäß den Strategieauslöseinformationen Erfassen (201) durch einen Strategie-"Server" einer aggregierten Operation, die den Strategieauslöseinformationen entspricht und zum Ausführen einer Strategiesteuerung an einer Gruppe von Anwendersitzungen verwendet wird, wobei die aggregierte Operation eine Operationsregel, die der Strategiesteuerung entspricht, und einen Bedingungsparameter, der zum Bestimmen durch eine "Gateway"-Vorrichtung der Gruppe von Anwendersitzungen verwendet wird, umfasst, wobei der Strategie-"Server" eine Strategie- und Gebührenberechnungsregelfunktion, PCRF, ist und die "Gateway"-Vorrichtung eine "Gateway"-Vorrichtung ist, die eine Strategie- und Gebührenberechnungserzwingungsfunktion, PCEF, oder eine Trägerbindungs- und Ereignismeldefunktion, BBERF, enthält; und
Senden (202) durch den Strategie-"Server" einer ersten Dienstnachricht, die die aggregierte Operation umfasst, an die "Gateway"-Vorrichtung, so dass die "Gateway"-Vorrichtung die Gruppe der Anwendersitzungen gemäß dem Bedingungsparameter bestimmt und eine Operation an der Gruppe von Anwendersitzungen gemäß der Operationsregel ausführt, wobei der Bedingungsparameter eine QoS-Klassenkennung, QCI, eine Aufwärtsstrecken-/Abwärtsstreckenbandbreite, eine Zuweisungsbeibehaltungspriorität, ARP, oder Paketdatennetz-Informationen, PDN-Informationen, oder eine Kombination aus diesen enthält,
wobei das Senden der ersten Dienstnachricht, die die aggregierte Operation umfasst, an die "Gateway"-Vorrichtung Folgendes umfasst:
Senden einer Dienstnachricht, die die aggregierte Operation umfasst und einer neu aufgebauten dedizierten Sitzung entspricht, an die "Gateway"-Vorrichtung,
wobei vor dem Senden der Dienstnachricht, die die aggregierte Operation umfasst und der neu aufgebauten dedizierten Sitzung entspricht, an die "Gateway"-Vorrichtung das Verfahren ferner Folgendes umfasst:
Empfangen einer ersten Anforderungsnachricht, die von der "Gateway"-Vorrichtung gesendet wird, wobei die erste Anforderungsnachricht zum Anfordern des Aufbauens der dedizierten Sitzung, die zum Übertragen der aggregierten Operation verwendet wird, verwendet wird, wobei die erste Anforderungsnachricht eine dedizierte Anforderungs-ID und eine dedizierte Sitzungs-ID umfasst, die zum Identifizieren der dedizierten Sitzung verwendet werden; und
Speichern der dedizierten Anwendungs-ID und der dedizierten Sitzungs-ID;
wobei die Dienstnachricht, die die aggregierte Operation umfasst und der neu aufgebauten dedizierten Sitzung entspricht, die aggregierte Operation, die dedizierte Anwendungs-ID und die dedizierte Sitzungs-ID umfasst.

2. Strategiesteuerverfahren für eine Anwendersitzung nach Anspruch 1, wobei vor dem Erfassen der aggregierten Operation, die den Strategieauslöseinformationen entspricht und zum Ausführen der Strategiesteuerung an der Gruppe von Anwendersitzungen gemäß den Strategieauslöseinformationen verwendet wird, das Verfahren ferner Folgendes umfasst:
Empfangen einer zweiten Dienstnachricht, die die Strategieauslöseinformationen umfasst und von der "Gateway"-Vorrichtung gesendet wird.

3. Strategiesteuerverfahren für eine Anwendersitzung, wobei das Verfahren Folgendes umfasst:
Empfangen (301) durch eine "Gateway"-Vorrichtung einer ersten Dienstnachricht, die von einem Strategie-"Server" gesendet wird und eine aggregierte Operation umfasst, wobei die aggregierte Operation den Strategieauslöseinformationen entspricht und zum Ausführen einer Strategiesteuerung an einer Gruppe von Anwendersitzungen verwendet wird, wobei die aggregierte Operation eine Operationsregel, die der Strategiesteuerung entspricht, und einen Bedingungsparameter, der zum Bestimmen durch die "Gateway"-Vorrichtung der Gruppe von Anwendersitzungen verwendet wird, umfasst, wobei der Strategie-"Server" eine Strategie- und Gebührenberechnungsregelfunktion, PCRF, ist und die "Gateway"-Vorrichtung eine "Gateway"-Vorrichtung ist, die eine Strategie- und Gebührenberechnungserzwingungsfunktion, PCEF, oder eine Trägerbindungs- und Ereignismeldefunlction, BBERF, enthält; und
Bestimmen (302) der Gruppe der Anwendersitzungen gemäß dem Bedingungsparameter und Ausführen einer Operation an der Gruppe von Anwendersitzungen gemäß der Operationsregel durch die "Gateway"-Vorrichtung, wobei der Bedingungsparameter eine QoS-Klassenkennung, QCI, eine Aufwärtsstrecken-/Abwärtsstreckenbandbreite, eine Zuweisungsbeibehaltungspriorität, ARP, oder Paketdatennetz-Informationen, PDN-Informationen, oder eine Kombination aus diesen enthält,
wobei das Empfangen der ersten Dienstnachricht, die von dem Strategie-"Server" gesendet wird und die aggregierte Operation umfasst, Folgendes umfasst:
Empfangen einer Dienstnachricht, die von dem Strategie-"Server" gesendet wird, die aggregierte Operation umfasst und einer neu aufgebauten dedizierten Sitzung entspricht,
wobei vor dem Empfangen der Dienstnachricht, die von dem Strategie-"Server" gesendet wird, die aggregierte Operation umfasst und der neu aufgebauten dedizierten Sitzung entspricht, das Verfahren ferner Folgendes umfasst:
Senden einer ersten Anforderungsnachricht an den Strategie-"Server", wobei die erste Anforderungsnachricht zum Anfordern des Aufbauens der dedizierten Sitzung, die zum Übertragen der aggregierten Operation verwendet wird, verwendet wird, wobei die erste Anforderungsnachricht eine dedizierte Anforderungs-ID und eine dedizierte Sitzungs-ID umfasst, die zum Identifizieren der dedizierten Sitzung verwendet werden;
wobei die Dienstnachricht, die die aggregierte Operation umfasst und der neu aufgebauten dedizierten Sitzung entspricht, die aggregierte Operation, die dedizierte Anwendungs-ID und die dedizierte Sitzungs-ID umfasst.

4. Strategiesteuerverfahren für eine Anwendersitzung nach Anspruch 3, wobei vor dem Empfangen der ersten Dienstnachricht, die von dem Strategie-"Server" gesendet wird und die aggregierte Operation umfasst, das Verfahren ferner Folgendes umfasst:
Erfassen der Strategieauslöseinformationen gemäß einer vorgegebenen Auslöseregel; und
Senden einer zweiten Dienstnachricht, die die Strategieauslöseinformationen umfasst, an den Strategie-"Server", so dass der Strategie-"Server" die erste Dienstnachricht, die die aggregierte Operation umfasst, gemäß den Strategieauslöseinformationen sendet.

5. Strategie-"Server", der Folgendes umfasst:
ein Erfassungsmodul (71), das konfiguriert ist: gemäß den Strategieauslöseinformationen eine aggregierte Operation, die den Strategieauslöseinformationen entspricht und zum Ausführen einer Strategiesteuerung an einer Gruppe von Anwendersitzungen verwendet wird, zu erfassen, wobei die aggregierte Operation eine Operationsregel, die der Strategiesteuerung entspricht, und einen Bedingungsparameter, der zum Bestimmen durch eine "Gateway"-Vorrichtung der Gruppe von Anwendersitzungen verwendet wird, umfasst; und
ein Sendemodul (73), das konfiguriert ist, eine erste Dienstnachricht, die die aggregierte Operation umfasst, an die "Gateway"-Vorrichtung zu senden, so dass die "Gateway"-Vorrichtung die Gruppe der Anwendersitzungen gemäß dem Bedingungsparameter bestimmt und eine Operation an der Gruppe von Anwendersitzungen gemäß der Operationsregel ausführt, wobei der Bedingungsparameter eine QoS-Klassenkennung, QCI, eine Aufwärtsstrecken-/Abwärtsstreckenbandbreite, eine Zuweisungsbeibehaltungspriorität, ARP, oder
Paketdatennetz-Informationen, PDN-Informationen, oder eine Kombination aus diesen enthält,
wobei der Strategie-"Server" eine Strategie- und Gebührenberechnungsregelfunktion, PCRF, ist und die "Gateway"-Vorrichtung eine "Gateway"-Vorrichtung ist, die eine Strategie- und Gebührenberechnungserzwingungsfunktion, PCEF, oder eine Trägerbindungs- und Ereignismeldefunktion, BBERF, enthält,
wobei das Sendemodul (73) Folgendes umfasst:
eine erste Sendeeinheit (731), die konfiguriert ist, eine Dienstnachricht, die die aggregierte Operation umfasst und einer neu aufgebauten dedizierten Sitzung entspricht, an die "Gateway"-Vorrichtung zu senden,
wobei der Strategie-"Server" ferner Folgendes umfasst:
ein zweites Empfangsmodul (77), das konfiguriert ist, eine erste Anforderungsnachricht, die von der "Gateway"-Vorrichtung gesendet wird, zu empfangen, wobei die erste Anforderungsnachricht zum Anfordern des Aufbauens der dedizierten Sitzung, die der von der ersten Sendeeinheit (731) gesendeten Dienstnachricht entspricht, verwendet wird, wobei die erste Anforderungsnachricht eine dedizierte Anforderungs-ID und eine dedizierte Sitzungs-ID umfasst, die zum Identifizieren der dedizierten Sitzung verwendet werden; und
ein Speichermodul (79), das konfiguriert ist, die dedizierte Anwendungs-ID und die dedizierte Sitzungs-ID zu speichern;
wobei die Dienstnachricht, die die aggregierte Operation umfasst und der neu aufgebauten dedizierten Sitzung entspricht, die aggregierte Operation, die dedizierte Anwendungs-ID und die dedizierte Sitzungs-ID umfasst.

6. Strategie-"Server" nach Anspruch 5, der ferner Folgendes umfasst:
ein erstes Empfangsmodul (75), das konfiguriert ist, eine zweite Dienstnachricht, die die Strategieauslöseinformationen umfasst und von der "Gateway"-Vorrichtung gesendet wird, zu empfangen.

7. "Gateway"-Vorrichtung, die Folgendes umfasst:
ein Empfangsmodul (91), das konfiguriert ist, eine erste Dienstnachricht, die von einem Strategie-"Server" gesendet wird und eine aggregierte Operation umfasst, zu empfangen, wobei die aggregierte Operation den Strategieauslöseinformationen entspricht und zum Ausführen einer Strategiesteuerung an einer Gruppe von Anwendersitzungen verwendet wird, wobei die aggregierte Operation eine Operationsregel, die der Strategiesteuerung entspricht, und einen Bedingungsparameter, der zum Bestimmen durch eine "Gateway"-Vorrichtung der Gruppe von Anwendersitzungen verwendet wird, umfasst, wobei der Strategie-"Server" eine Strategie- und Gebührenberechnungsregelfunktion, PCRF, ist und die "Gateway"-Vorrichtung eine "Gateway"-Vorrichtung ist, die eine Strategie- und Gebührenberechnungserzwingungsfunktion, PCEF, oder eine Trägerbindungs- und Ereignismeldefunktion, BBERF, enthält; und
ein Operationsmodul (93), das konfiguriert ist, die Gruppe der Anwendersitzungen gemäß dem Bedingungsparameter zu bestimmen und eine Operation an der Gruppe von Anwendersitzungen gemäß der Operationsregel auszuführen, wobei der Bedingungsparameter eine QoS-Klassenkennung, QCI, eine Aufwärtsstrecken-/Abwärtsstreckenbandbreite, eine Zuweisungsbeibehaltungspriorität, ARP, oder Paketdatennetz-Informationen, PDN-Informationen, oder eine Kombination aus diesen enthält,
wobei das Empfangsmodul (91) Folgendes umfasst:
eine erste Empfangseinheit (911), die konfiguriert ist, eine Dienstnachricht zu empfangen, die von dem Strategie-"Server" gesendet wird, die aggregierte Operation umfasst und einer neu aufgebauten dedizierten Sitzung entspricht,
wobei die "Gateway"-Vorrichtung ferner Folgendes umfasst:
ein zweites Sendemodul (99), das konfiguriert ist, eine erste Anforderungsnachricht an den Strategie-"Server" zu senden, wobei die erste Anforderungsnachricht zum Anfordern des Aufbauens der dedizierten Sitzung, die der durch die erste Empfangseinheit empfangenen Dienstnachricht entspricht, verwendet wird, wobei die erste Anforderungsnachricht eine dedizierte Anforderungs-ID und eine dedizierte Sitzungs-ID umfasst, die zum Identifizieren der dedizierten Sitzung verwendet werden;
wobei die Dienstnachricht, die die aggregierte Operation umfasst und der neu aufgebauten dedizierten Sitzung entspricht, die aggregierte Operation, die dedizierte Anwendungs-ID und die dedizierte Sitzungs-ID umfasst.

8. "Gateway"-Vorrichtung nach Anspruch 7, die ferner Folgendes umfasst:
ein Erfassungsmodul (95), das konfiguriert ist, die Strategieauslöseinformationen gemäß einer vorgegebenen Auslöseregel zu erfassen; und
ein erstes Sendemodul (97), das konfiguriert ist, eine zweite Dienstnachricht, die die Strategieauslöseinformationen umfasst, an den Strategie-"Server" zu senden, so dass der Strategie-"Server" die erste Dienstnachricht, die die aggregierte Operation umfasst, gemäß den Strategieauslöseinformationen sendet.

9. Strategiesteuersystem für eine Anwendersitzung, **dadurch gekennzeichnet, dass** das Strategiesteuersystem den Strategie-"Server" nach einem der Ansprüche 5 bis 6 und die "Gateway"-Vorrichtung nach einem der Ansprüche 7 bis 8 umfasst.

## Revendications

1. Procédé de commande de politique pour une session d'utilisateur, le procédé consistant :
en fonction d'informations de déclenchement de politique, à acquérir (201), au moyen d'un serveur de politique, une opération agrégée qui correspond aux informations de déclenchement de politique et est utilisée pour effectuer une commande de politique sur un groupe de sessions d'utilisateur, dans lequel l'opération agrégée comprend une règle d'opération correspondant à la commande de politique et un paramètre de condition qui est utilisé pour déterminer, au moyen d'un dispositif de passerelle, le groupe de sessions d'utilisateur, dans lequel le serveur de politique est une fonction de règles de facturation et de politique (PCRF) et le dispositif de passerelle est un dispositif de passerelle qui comprend une fonction d'application de facturation et de politique (PCEF) ou une fonction de liaison de support et de rapport d'événement (BBERF) ; et
à envoyer (202), au moyen du serveur de politique, un premier message de service qui comprend l'opération agrégée au dispositif de passerelle de telle sorte que le dispositif de passerelle détermine le groupe de sessions d'utilisateur en fonction du paramètre de condition et exécute une opération sur le groupe de sessions d'utilisateur en fonction de la règle d'opération, dans lequel le paramètre de condition comprend un identifiant de classe de qualité de service (QCI), une largeur de bande de liaison montante/liaison descendante, une priorité de conservation d'attribution (ARP) ou des informations de réseau de données par paquets (PDN) ou une combinaison de ceux-ci,
dans lequel l'envoi du premier message de service qui comprend l'opération agrégée au dispositif de passerelle consiste à :
envoyer un message de service qui comprend l'opération agrégée et correspond à une session dédiée établie récemment, au dispositif de passerelle,
dans lequel, avant l'envoi du premier message de service qui comprend l'opération agrégée et correspond à la session dédiée établie récemment, au dispositif de passerelle, le procédé consiste en outre à :
recevoir un premier message de requête envoyé par le dispositif de passerelle, dans lequel le premier message de requête est utilisé pour demander l'établissement de la session dédiée utilisée pour transmettre l'opération agrégée et le premier message de requête comprend un identifiant (ID) de requête dédiée et un ID de session dédiée qui sont utilisés pour identifier la session dédiée ; et
stocker l'ID d'application dédiée et l'ID de session dédiée ;
le message de service qui comprend l'opération agrégée et correspond à la session dédiée établie récemment comprenant l'opération agrégée, l'ID d'application dédiée et l'ID de session dédiée.

2. Procédé de commande de politique pour une session d'utilisateur selon la revendication 1, dans lequel, avant l'acquisition de l'opération agrégée qui correspond aux informations de déclenchement de politique et est utilisée pour effectuer la commande de politique sur le groupe de sessions d'utilisateur en fonction des informations de déclenchement de politique, le procédé consiste en outre à :
recevoir un second message de service qui comprend les informations de déclenchement de politique et est envoyé par le dispositif de passerelle.

3. Procédé de commande de politique pour une session d'utilisateur, le procédé consistant à :
recevoir (301), au moyen d'un dispositif de passerelle, un premier message de service qui est envoyé par un serveur de politique et comprend une opération agrégée, dans lequel l'opération agrégée correspond à des informations de déclenchement de politique et est utilisée pour effectuer une commande de politique sur un groupe de sessions d'utilisateur, et l'opération agrégée comprend une règle d'opération correspondant à la commande de politique et un paramètre de condition qui est utilisé pour déterminer, au moyen du dispositif de passerelle, le groupe de sessions d'utilisateur, et le serveur de politique est une fonction de règles de facturation et de politique (PCRF) et le dispositif de passerelle est un dispositif de passerelle qui comprend une fonction d'application de facturation et de politique (PCEF) ou une fonction de liaison de support et de rapport d'événement (BBERF) ; et
déterminer (302), au moyen du dispositif de passerelle, le groupe de sessions d'utilisateur en fonction du paramètre de condition et exécuter une opération sur le groupe de sessions d'utilisateur en fonction de la règle d'opération, dans lequel le paramètre de condition comprend un identifiant de classe de qualité de service (QCI), une largeur de bande de liaison montante/liaison descendante, une priorité de conservation d'attribution (ARP) ou des informations de réseau de données par paquets (PDN) ou une combinaison de ceux-ci,
dans lequel la réception du premier message de service qui est envoyé par le serveur de politique et comprend l'opération agrégée consiste à :
recevoir un message de service qui est envoyé par le serveur de politique, comprend l'opération agrégée et correspond à une session dédiée établie récemment,
dans lequel, avant la réception du message de service qui est envoyé par le serveur de politique, comprend l'opération agrégée et correspond à la session dédiée établie récemment, le procédé consiste en outre à :
envoyer un premier message de requête au serveur de politique, dans lequel le premier message de requête est utilisé pour demander l'établissement de la session dédiée utilisée pour transmettre l'opération agrégée et le premier message de requête comprend un ID de requête dédiée et un ID de session dédiée qui sont utilisés pour identifier la session dédiée ;
le message de service qui comprend l'opération agrégée et correspond à la session dédiée établie récemment comprend l'opération agrégée, l'ID d'application dédiée et l'ID de session dédiée.

4. Procédé de commande de politique pour une session d'utilisateur selon la revendication 3, dans lequel, avant la réception du premier message de service qui est envoyé par le serveur de politique et comprend l'opération agrégée, le procédé consiste en outre à :
acquérir les informations de déclenchement de politique en fonction d'une règle de déclenchement prédéfinie ; et
envoyer un second message de service qui comprend les informations de déclenchement de politique au serveur de politique de telle sorte que le serveur de politique envoie le premier message de service qui comprend l'opération agrégée en fonction des informations de déclenchement de politique.

5. Serveur de politique comprenant :
un module d'acquisition (71), configuré : en fonction d'informations de déclenchement de politique, pour acquérir une opération agrégée qui correspond aux informations de déclenchement de politique et est utilisée pour effectuer une commande de politique sur un groupe de sessions d'utilisateur, dans lequel l'opération agrégée comprend une règle d'opération correspondant à la commande de politique et un paramètre de condition qui est utilisé pour déterminer, au moyen d'un dispositif de passerelle, le groupe de sessions d'utilisateur ; et
un module d'envoi (73), configuré pour envoyer un premier message de service qui comprend l'opération agrégée au dispositif de passerelle de telle sorte que le dispositif de passerelle détermine le groupe de sessions d'utilisateur en fonction du paramètre de condition et exécute une opération sur le groupe de sessions d'utilisateur en fonction de la règle d'opération, dans lequel le paramètre de condition comprend un identifiant de classe de qualité de service (QCI), une largeur de bande de liaison montante/liaison descendante, une priorité de conservation d'attribution (ARP) ou des informations de réseau de données par paquets (PDN) ou une combinaison de ceux-ci,
dans lequel le serveur de politique est une fonction de règles de facturation et de politique (PCRF) et le dispositif de passerelle est un dispositif de passerelle qui comprend une fonction d'application de facturation et de politique (PCEF) ou une fonction de liaison de support et de rapport d'événement (BBERF),
dans lequel le module d'envoi (73) comprend :
une première unité d'envoi (731), configurée pour envoyer un message de service qui comprend l'opération agrégée et correspond à une session dédiée établie récemment, au dispositif de passerelle,
dans lequel le serveur de politique comprend en outre :
un second module de réception (77), configuré pour recevoir un premier message de requête envoyé par le dispositif de passerelle, dans lequel le premier message de requête est utilisé pour demander l'établissement de la session dédiée correspondant au message de service envoyé par la première unité d'envoi (731) et le premier message de requête comprend un ID d'application dédiée et un ID de session dédiée qui sont utilisés pour identifier la session dédiée ; et
un module de stockage (79), configuré pour stocker l'ID d'application dédiée et l'ID de session dédiée ;
le message de service qui comprend l'opération agrégée et correspond à la session dédiée établie récemment comprend l'opération agrégée, l'ID d'application dédiée et l'ID de session dédiée.

6. Serveur de politique selon la revendication 5, comprenant en outre :
un premier module de réception (75), configuré pour recevoir un second message de service qui comprend des informations de déclenchement de politique et est envoyé par le dispositif de passerelle.

7. Dispositif de passerelle comprenant :
un module de réception (91), configuré pour recevoir un premier message de service qui est envoyé par un serveur de politique et comprend une opération agrégée, dans lequel l'opération agrégée correspond à des informations de déclenchement de politique et est utilisée pour effectuer une commande de politique sur un groupe de sessions d'utilisateur, et l'opération agrégée comprend une règle d'opération correspondant à la commande de politique et un paramètre de condition qui est utilisé pour déterminer, au moyen d'un dispositif de passerelle, le groupe de sessions d'utilisateur, dans lequel le serveur de politique est une fonction de règles de facturation et de politique (PCRF) et le dispositif de passerelle est un dispositif de passerelle qui comprend une fonction d'application de facturation et de politique (PCEF) ou une fonction de liaison de support et de rapport d'événement (BBERF) ; et
un module de commande (93), configuré pour déterminer le groupe de sessions d'utilisateur en fonction du paramètre de condition et exécuter une opération sur le groupe de sessions d'utilisateur en fonction de la règle d'opération, dans lequel le paramètre de condition comprend un identifiant de classe de qualité de service (QCI),
une largeur de bande de liaison montante/liaison descendante, une priorité de conservation d'attribution (ARP) ou des informations de réseau de données par paquets (PDN) ou une combinaison de ceux-ci,
dans lequel le module de réception (91) comprend :
une première unité de réception (911), configurée pour recevoir un message de service qui est envoyé par le serveur de politique, comprend l'opération agrégée et correspond à une session dédiée établie récemment,
dans lequel le dispositif de passerelle comprend en outre :
un second module d'envoi (99), configuré pour envoyer un premier message de requête au serveur de politique, dans lequel le premier message de requête est utilisé pour demander l'établissement de la session dédiée correspondant au message de service reçu par la première unité de réception et le premier message de requête comprend un ID d'application dédiée et un ID de session dédiée qui sont utilisés pour identifier la session dédiée ;
le message de service qui comprend l'opération agrégée et correspond à la session dédiée établie récemment comprend l'opération agrégée, l'ID d'application dédiée et l'ID de session dédiée.

8. Dispositif de passerelle selon la revendication 7, comprenant en outre :
un module d'acquisition (95), configuré pour acquérir les informations de déclenchement de politique en fonction d'une règle de déclenchement prédéfinie ; et
un premier module d'envoi (97), configuré pour envoyer un second message de service qui comprend les informations de déclenchement de politique au serveur de politique de telle sorte que le serveur de politique envoie le premier message de service qui comprend l'opération agrégée en fonction des informations de déclenchement de politique.

9. Système de commande de politique pour une session d'utilisateur, **caractérisé en ce que** le système de commande de politique comprend le serveur de politique selon l'une quelconque des revendications 5 à 6 et le dispositif de passerelle selon l'une quelconque des revendications 7 à 8.
